# EUROPEAN PATENT SPECIFICATION

(11) **EP 0 701 771 B1**
(45) Date of publication and mention of the grant of the patent: **10.01.2001**
(21) Application number: 95202450.3
(22) Date of filing: 08.09.1995
(51) Int. Cl.: A01D 78/10, A01B 73/04

(54) **An agricultural machine**
Landwirtschaftliche Maschine
Machine agricole

(30) Priority: 16.09.1994 NL 9401502
(43) Date of publication of application: 20.03.1996
(73) Proprietor: MAASLAND N.V., 3155 PD Maasland (NL)
(72) Inventor: Beije, Marinus, NL-2991 BV Barendrecht (NL); van den Engel, Alfonsus Jacobus, NL-3137 KC Vlaardingen (NL); Koorn, Maarten, NL-3123 CP Schiedam (NL)
(74) Representative: Corten, Maurice Jean F.M.

(56) References cited:
- EP-A- 0 056 118
- EP-A- 0 316 560
- FR-A- 2 280 306
- GB-A- 2 057 239
- GB-A- 2 078 481
- NL-A- 9 000 529
- US-A- 3 255 830

## Description

The present invention relates to an agricultural machine according to the preamble of claim 1.

Such a machine is known from document FR-A-2 280 306, which describes an agricultural machine with at both sides of a central portion two lateral frame portions. The four lateral frame portions are foldable into a transport position above the central portion, by only a single cylinder placed above and connected with the central frame portion. One end of the cylinder is directly connected with an outer frame portion, while the other end via a centre link is connected with the central frame portion, as a result of which the cylinder is only indirectly connected with the outer lateral frame portion. The above described machine has a relative large central cylinder. Another disadvantage of the above described construction is the complex set of combined axes. The present invention has for its object to provide an alternative and economically advantageous construction for adjusting the machine to or from the transport position in which a relatively small cylinder and a few connecting elements with less pivot points are used. According to the invention, this is achieved by arrangement according to the characterizing part of claim 1.

According to the invention, such a construction is in particular suitable for haymaking machines, such as finger-wheel rakes, so that the machine in accordance with the invention then also includes working members for tedding and/or raking crop, a lateral frame portion including at least two working members.

In accordance with the invention, such an intermediate element for causing a lateral frame portion that is located in the farthest outer position to pivot may include a third pivot point, in which a further connecting element pivotally connected to this outermost lateral frame portion is pivotally coupled. In accordance with a further advantageous embodiment of such a frame structure, the outermost frame portion includes a supporting bracket for pivotally supporting the further connecting element, which bracket extends to beyond the pivot shaft between the relevant outermost and the relevant innermost lateral frame portion, and a bevelled end of which constitutes a stop for the transport position of the machine, the construction being such that a further pivotal motion of the lateral frame portions is inhibited. A further feature of the construction in accordance with the invention relates to an intermediate element, the spacing between the pivot shaft located in its connection to the lateral frame portion and the pivot shaft located in the point of connection thereof to the adjusting cylinder exceeding the spacing between said pivot shafts in the facing intermediate element.

In accordance with a special feature of the invention, the machine includes means, with the aid of which, for obtaining the outwardly folded state of the machine, always one lateral frame portion is adjusted from the transport position to a fully outwardly folded state prior to the facing frame portion. The invention, therefore, also embraces an agricultural machine provided with means, with the aid of which, for the object of obtaining the outwardly folded state of the machine, always one lateral frame portion is adjusted from the transport position to a fully outwardly folded state prior to the facing lateral frame portion. More in particular, always the frame portion comprising the intermediate element with the shortest spacing between the pivot shafts connecting this intermediate element to the relevant lateral frame portion or the adjusting cylinder, respectively, is first adjusted to the outwardly folded state. In a feasible embodiment in accordance with the invention, said means are constituted by a push-out member, which is connected to the central frame portion and is operative with respect to only one lateral frame portion of the machine. In yet another advantageous embodiment in accordance with the invention, the said means include a stop element disposed in the region of a pawl intended for locking the machine onto one of the two lateral frame portions, this stop limiting in the transport position of the machine the deflection of a locking hook acting on the pawl. In this embodiment, in accordance with the invention, the locking hooks can be operated from the driver's seat with the aid of a cord which is threaded along the central frame portion and in a direction towards the locking hooks branches out into two portions of unequal length, whilst the cord portion leading to the locking hook is in the region of the stop element of such a shorter length than the cord portion leading to the facing locking hook that operating the cord up to the stop of said locking hook against the said stop does not result in unlocking of the facing locking hook.

In accordance with a further special feature of the invention, the machine comprises an adjusting cylinder, whose piston includes a pressure limiting element. The invention, therefore, also includes an agricultural machine having an adjusting cylinder, whose piston includes a pressure limiting element. In accordance with the invention, the pressure limiter has been provided such that the pressure acting in the direction of the outward stroke of the cylinder is limited or that the pressure in the cylinder chamber without piston rod is limited, more specifically to a maximum of approximately 1/3 of the pressure required for retracting the adjusting cylinder, and more in particular to a maximum of approximately 50 bar.

A still further special feature of the invention relates to an agricultural machine including working members for tedding crop lying on the soil, which machine at at least one end is provided with a shielding member, with the aid of which the lateral tedding of crop is limited. In accordance with the invention, the shield extends, taken in a plan view, and relative to the direction of travel, into the rearmost and outermost quarter of the relevant working member, predominantly along the peripheral line thereof, and predominantly in the vertical direction. In this situation, the shielding member is constituted by mainly vertically extending tines, made of resilient material, such as spring steel or synthetic resin material, which tines reach during operation of the machine to as far as the soil, so that the tines perform a raking function.

A still further special feature of the invention relates to a supporting member for the machine, which member comprises a wheel and a supporting leg, plate material being attached to this supporting leg to increase its surface area. The invention, therefore, also relates to agricultural machines, more specifically hay-making machines, having a supporting member with a wheel and a supporting leg, plate material being attached to this supporting leg to increase the surface area thereof. In a preferred embodiment, the plate material is attached in the direction of operative travel of the machine and this plate material is formed by a metal plate section which is attached to the trailing side of the supporting leg and has an upper rim which extends at least to the upper end of the relevant leg portion and a trailing edge which, taken in a line perpendicular to a local line of contact, is located at least 15 cms from the trailing side of the leg. More in particular, taken in a side view, the plate section is attached at least to that portion of the relevant supporting leg portion that does not overlap the wheel.

In a likewise special feature in accordance with the invention, the supporting leg of the supporting member includes an upper portion and a lower portion which is pivotal about a pivot shaft in a bush extending transversely to the longitudinal direction of the upper leg portion and is locked therein inter alia with the aid of a quick-acting locking element against axial shift and, because of the presence of this quick-acting locking element, can be removed directly, i.e. without the use of auxiliary tools, from the bush. The invention, therefore, also relates to an agricultural machine, more in particular a haymaking machine having a supporting member with a supporting leg comprising an upper portion and a lower portion, which lower portion is pivotal about a pivot shaft in a bush extending transversely to the longitudinal direction of the upper leg portion and attached thereto and locked therein inter alia with the aid of a quick-acting locking element against axial shift and, because of the presence of this quick-acting locking element, can be removed directly, i.e. without the use of auxiliary tools, from the bush.

For a better understanding of the invention and to show how the same may be carried into effect, reference will now be made, by way of example, to the accompanying drawings, in which:
Figure 1 is the rear view of a machine of the invention, in the outwardly folded state;
Figure 2 is a view as shown in Figure 1, in which the machine is in a transport position;
Figure 3 is an enlarged view of a portion of Figure 2;
Figure 4 is an enlarged plan view of a portion of the machine as shown in Figure 1;
Figure 5 is a detailed view of a portion of the lifting cylinder of the machine, illustrated from a view in accordance with Figure 1;
Figure 6 shows the transport position of an embodiment, in which the machine in accordance with the invention includes an alternative unlocking structure;
Figure 7 is a view of a first stage in the action of the unlocking structure as shown in Figure 6;
Figure 8 is a view of a second stage in the action of the unlocking structure as shown in Figure 6;
Figure 9 is a plan view of a further elaboration of a detail of the machine in accordance with Figure 1;
Figure 10 is a side view of a further elaboration of a supporting member of the machine in accordance with Figure 1, and
Figure 11 is a rear view of the construction as shown in Figure 10.

Corresponding components in the drawings have been given the same reference numerals. In addition, the invention is in no way limited to the embodiments shown and described here; they only serve as an illustration of the inventive idea as defined by the claims.

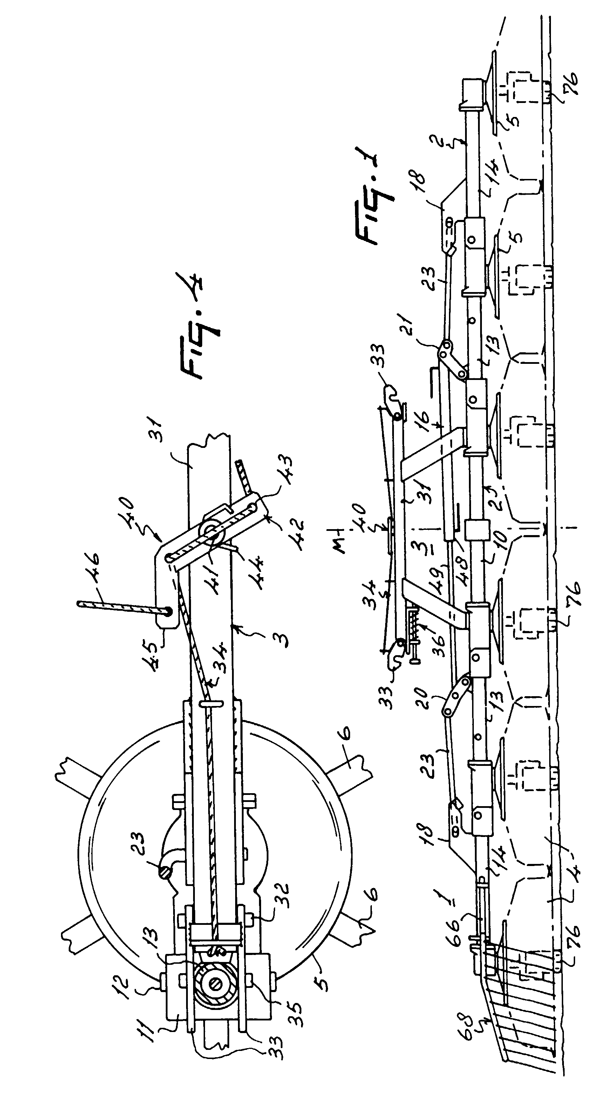

Figure 1 is a rear view of a known per se haymaking machine, which is intended for tedding crop lying on the ground, such as hay. The machine is shown in a state in which it is folded from a transport position, which in this view substantially corresponds to the working position of the haymaking machine: in the working position, the hay-making machine slightly tilts forwards. The machine has a frame 2 in the form of a predominantly box-like profile which extends straight and substantially transversely to the direction of travel of a driving device. In its midway point, the frame is provided with a trestle 3 which at the leading side includes coupling means for coupling to a driving vehicle. At its bottom side, the frame 2 has working members 4 for working crop lying on the ground. A working member 4 is alternatively designated by the term "rotor". The rotors 4 are rotatable about shafts which are directed predominantly upwardly and at a square angle to the frame 2 and bearing-supported in the frame. In a manner known per se, the rotors 4 are drivable via a drive shaft, which is assembled from sections and is accommodated in the box-like frame 2. This drive shaft is couplable in the centre of the machine to the driving vehicle via a right-angled transmission and a coupling shaft connectable thereto.

A rotor 4 includes in the midway point and in the height direction just under the frame 2, a circular, somewhat conical plate-material hood 5 which is arranged concentrically about its rotary shaft. Against the bottom side of the hood, arms or tine carriers 6 are accommodated, six in the present embodiment. The arms 6 are arranged relative to each other at a constant angle and near their ends support a known per se group 7 of two or more tines 8. This tine group comprises at least one tine with a curved end which, through a first portion of its trajectory, moves horizontally over the soil. The frame 2 is supported by supporting members 9, which are each connected, in a known per se manner, centrally in a working member 4 to the frame 2.

The frame 2 includes a central frame portion 10, to which two working members 4 are connected and at both ends thereof a lateral frame portion 13, 14. A lateral frame portion 13, 14 consists in the present embodiment of an interior lateral frame portion 13 and an exterior lateral frame portion 14. Via a fork member 11 and a pivot shaft 12 extending predominantly in the direction of travel A, this frame portion is connected to the central frame portion 10. The interior and exterior lateral frame portions 13, 14 are interconnected in a corresponding manner via a pivot shaft 15. Said pivotal connections 12, 15 are incorporated with respect to a vertical centre plane M of the machine 1 extending in the direction of travel, always at the exterior side remote from the rotary shaft of a rotor 4. The individual frame portions 10, 13, 14 are always of such a length that the spacing between a pair of co-operating rotors 4, i.e. rotors 4 which at the leading side of the machine 1 rotate towards each other, exceeds the spacing between two adjacent rotors 4 which at the leading side rotate away from each other. In the present embodiment, the working ranges of each of the co-operating rotors 4 overlap to approximately 1/5 of their diameter at a maximum. To that end, each of the rotors 4 is connected to the drive shaft in such a manner that it is staggered relative to an adjacent rotor 4.

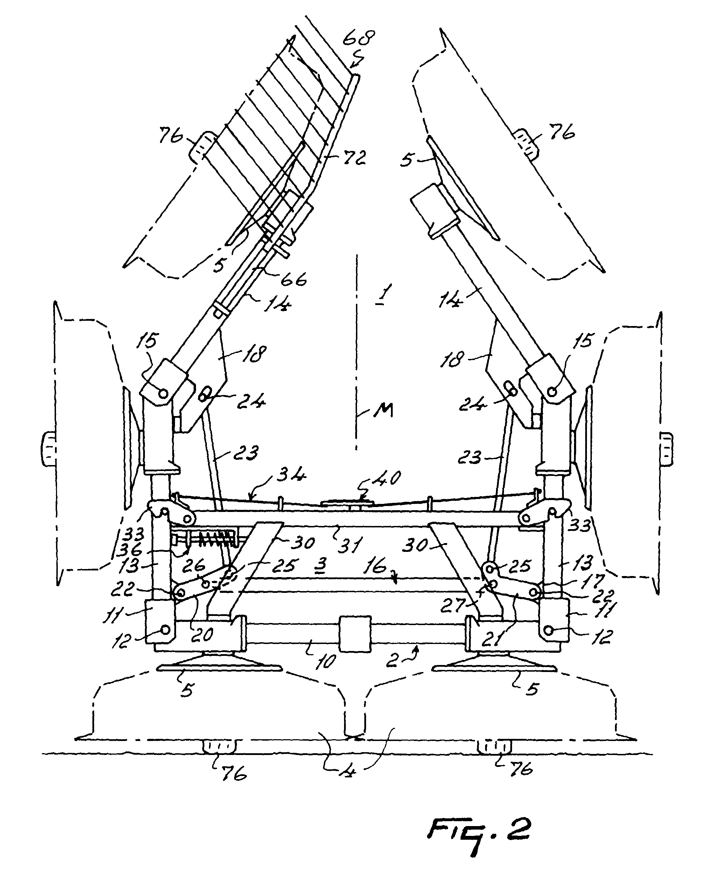

The machine includes an adjusting cylinder 16 which extends more or less above the central frame portion 10 and near its ends is connected to both lateral frame portions 13, 14. For that purpose, each of the lateral frame portions 13, 14 is fitted at its upper side with a bracket 17 and 18, respectively, in the shape of a lug or plate section. The interior and the exterior lateral frame portions 13 and 14, respectively, are interconnected by a rod system having a relatively short rod section in the form of a rocking member 20, 21. The rocking members also constitute an intermediate element in the connection of the cylinder ends to the frame portion 13. The rocking members have one end connected via a pivot shaft 22 extending parallel to the pivot shafts 12, 15 supported in the frame 2 to the bracket 17 of an interior lateral frame portion 13, and have their other end pivotally connected to a relatively longer second rod section 23. Near its outermost end, this rod section 23 is also connected to the bracket 18 of an exterior frame portion 14 via a pivot shaft 24 which extends parallel to the pivot shafts 12, 15 in the frame 2 and, in this embodiment, forms part of the rod 23. The pivot shaft 24 is mounted movably in a slotted hole. The outermost bracket 18 extends by means of a portion extending to the midway plane M to over the nearest pivot located in the frame 2 with the pivot shaft 15. This portion has a bevelled end, by means of which it bears against the interior frame portion 13 after deflection to the transport position shown in Figure 2.

The rod systems 20, 23 and 21, 23 of the two lateral frame portions 13, 14 are interconnected by the aforementioned adjusting cylinder 16. In the present embodiment, the adjusting cylinder 16 is connected for this purpose to the rocking members 20 and 21 via the pivot shafts 26 and 27, respectively. These pivot shafts 26 and 27 extend parallel to the pivot shafts 12, 15 accommodated in the frame 2. The rocking members 20, 21 face away at an acute angle to the frame 2 from the midway plane M, when the machine is in the position shown in Figure 1. That rocking member 20, that in Figure 1 is at the left-hand side, has in its centre a slight bend and, by means of an imaginary line through its pivot shafts 22, 25, extends relative to the frame 2 at an angle of approximately 30°. The connecting pivot shaft 26 between the rocking member 20 and the adjusting cylinder 16 is located at approximately the same distance from the said two pivot shafts 22, 25 of the rocking member 20. It is located, in the position shown, relative to the pivot shafts 15 and 22 in the frame 2 at a lower height than the connecting shaft 25 between the rocking member 20 and the further rod section 23. The imaginary line through the shafts 22 and 26 encloses in the present embodiment an angle of approximately 35° with the frame 2.

The rocking member 21 at the opposite side of the midway plane M of the haymaking machine encloses with the imaginary line between its connecting shafts 22 and 25 to the relevant innermost lateral frame portion 13 and the relevant further rod 23, respectively, an angle of approximately 28° with respect to the frame 2. The rocking member 21 has an acute, outwardly directed bend. In the present embodiment, the connecting pivot shaft 27 between the adjusting cylinder 16 and the rocking member 21 is accommodated in the region of this bend. The spacing between the connecting pivot shaft 27 and the connecting shaft 22 to the lateral frame portion 13 is approximately three times larger than the distance between this shaft 27 and the pivot shaft 25 to the rod 23. In accordance with the invention, the connecting pivot shaft 27 between the adjusting cylinder 16 and the rocking member 21 is arranged relative to the pivot shafts 15 and 22 in the frame at a higher level than the corresponding connecting pivot shaft 26 to the rocking member 20. In the present embodiment, the connecting pivot shaft 27 is furthermore accommodated at a higher level than the connecting pivot shaft 25 to the rod 23. The angle, which the imaginary line through the shafts 22 and 27 encloses with the frame 2, is approximately 42°.

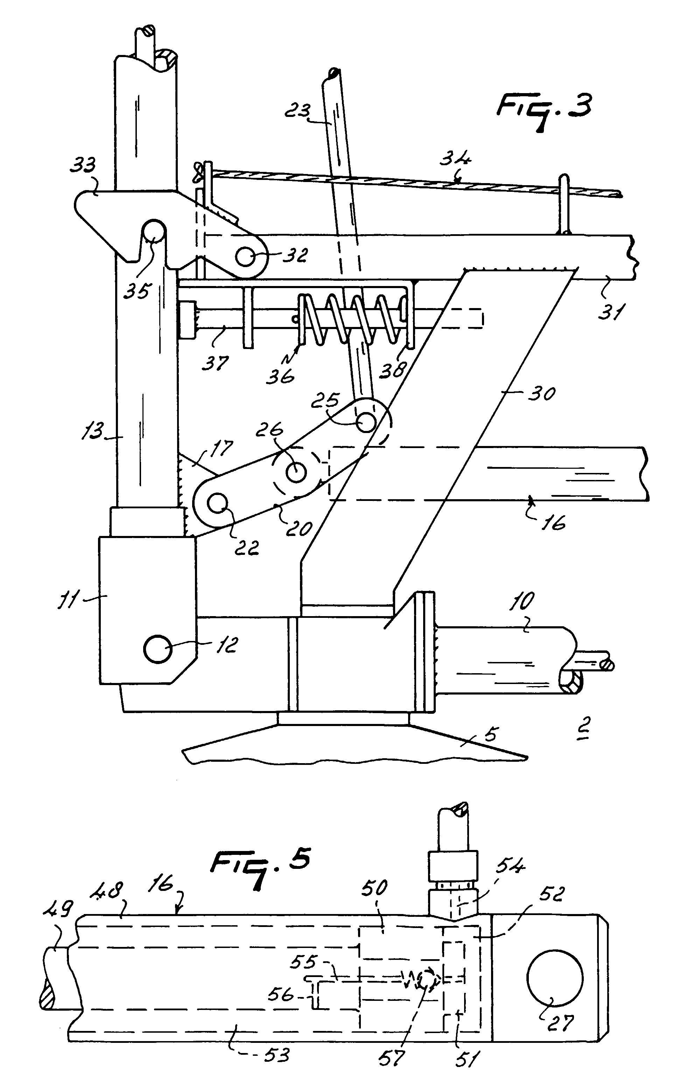

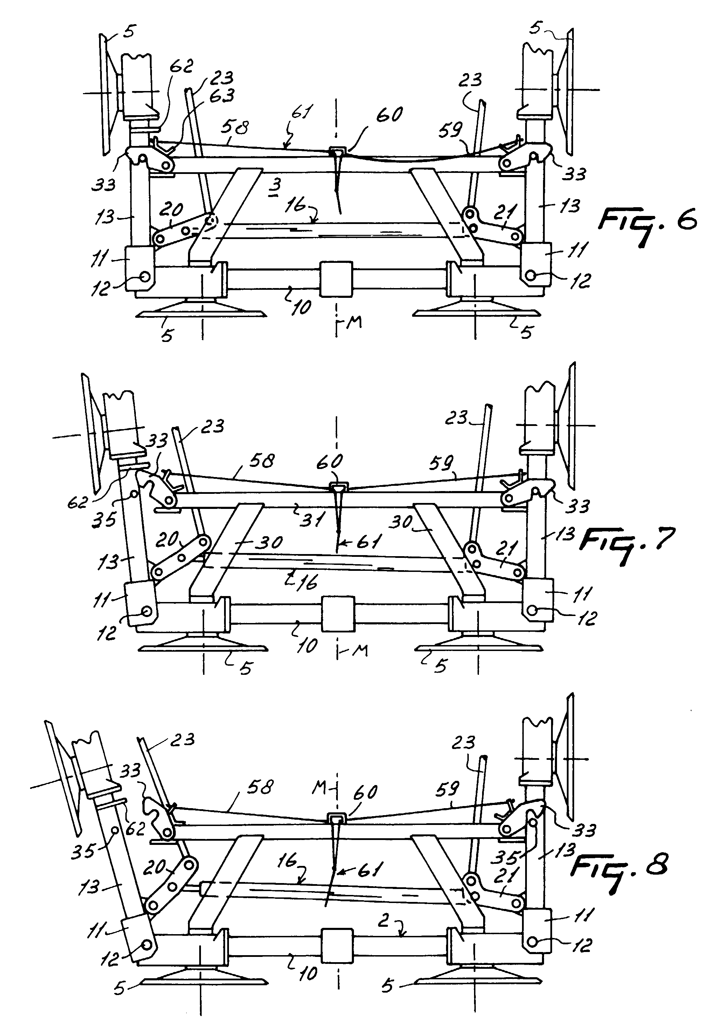

Figure 3 shows in detail a portion of the central frame portion 10 with the trestle 3 accommodated thereon, which trestle includes two predominantly upwardly directed supports 30 and a carrier 31 which extends horizontally and interconnects said supports. This carrier is designed as a rectangular box-like profile. The carrier 31 extends laterally almost as far as the pivot shaft 12 accommodated in the frame, and at its end has a rubber buffer, not visible in the drawing. By means of this buffer, the frame portion 13 is limited against an inward deflection of more than 90° with respect to the horizontal. The carrier 31 is fitted, near its two ends, with a locking hook 33 which is pivotal about a pivot shaft 32 which extends parallel to the pivot shafts 12, 14 accommodated in the frame 2. To effect a locking, the hook 33 can be lowered, with the aid of a cord 34 which is controllable from the tractor, over a pawl 35 disposed against the frame portion 13. Near that side of the rocking member 20 that is connected approximately in its midway point to the adjusting cylinder 16, a force member 36 is disposed against the bottom side of the carrier 31. The force member 36 includes a ram 37 which extends parallel to the carrier 31 and is movable in a known per se manner against the action of a spring in the longitudinal direction of frame 2 in a carrier bracket 38.

Figure 4 shows a central control device 40 for simultaneously and uniformly operating the two locking hooks 33. The control device 40 includes a plate-shaped lever 42 which is pivotal about an upwardly directed shaft 41. This shaft 41 is passed through the midway point of the lever 42 and is located in the midway point of the carrier 31. Near its one end, the lever 42 is fitted with a bore 43, through which is threaded a cord 34 stretched between the two locking hooks 33. With the aid of a known per se spring element 44, the lever 42 is kept in the locked position shown in Figure 4, whilst the lever 42, taken in a plan view, is at an angle of approximately 45° to the direction of travel A. The lever 42 further includes a control arm 45. Attached to the end thereof is a further cord section 46, which in the machine is passed to near the driver's seat of a driving vehicle. In the locked state, the control arm 45 extends transversely to the direction of travel A and, in the present embodiment, forms more or less an extension of the leading end of the lever 42.

Figure 5 shows an end section of the adjusting cylinder 16 used in the machine. The adjusting cylinder 16 includes a cylinder portion 48, a piston rod 49, a piston block 50 and a spacer element 51 screwed into the piston block 50. The element 51 is of such a length that, in the retracted state of the adjusting cylinder 16, the supply aperture 54 has a free outlet into the cylinder chamber 52. In accordance with a preferred embodiment of the present invention, a bore 55 is present in the longitudinal direction of the piston rod 49 from the free end of the spacer element 51. This bore interconnects, via a second bore 56 provided at a square angle thereto in the piston rod 49, two cylinder chambers 52, 53 which are separated by the piston 50. A one-directional pressure limiter or overpressure valve 57 is incorporated in the duct 55, 56. This limiter becomes operative, in the present embodiment, at a pressure of approximately 50 bar and is preferably accommodated in the spacer element 51 which can be screwed into the piston 50 and has a hexagonal circumference.

Figures 6, 7 and 8 illustrate an alternative construction for sequentially, one after the other, lowering the two lateral frame portions 13, 14 from the transport position to the working position. The locking hooks 33, which are known per se from Figures 3 and 4, are interconnected in this construction by a cord 61. This cord is threaded to a loop 60 which is arranged in the midway point of the carrier 31, and from there leads to the driver's seat of a driving vehicle. In accordance with the invention, the cord 61 is branched into two portions 58, 59 of unequal lengths, in such a manner that the cord portion 58 leading to the locking element 33 shown in the drawings at the left-hand side is shorter than the branched cord portion 59 leading to the facing locking element 33. Related in accordance with a feature of the invention to the construction of this cord 61, a plate-shaped lug 62 is disposed on the lateral frame portion 13 located at the left-hand side in the drawings. This lug extends parallel to a plane which extends transversely to the frame portion. In the transport position of the machine, this lug 62 constitutes a limitation for a further movement of the relevant hook 33. In connection with the difference in the lengths of the two branched cord portions 58, 59, such a limitation prevents the opposite locking hook 33 from likewise being lifted from its locked state. This provides that the left-hand lateral frame portion 13, 14 is lowered, by operating the adjusting cylinder 16, to a working position, whereas the right-hand lateral frame portion 13, 14 remains locked in the transport position. The limitation of the mobility of the left-hand locking hook 33 is eliminated upon lowering of the lateral frame portion. This provides the possibility for a further tightening of the unlocking cord 61 and thus for as yet pivoting the locking hook 33, located at the right-hand side in the drawings, from its locked state. The locking hooks 33 include at that side that faces away from the machine a stop 63 which renders it impossible for the locking hooks 33 to be pulled to beyond their dead point. In the present embodiment, the locking hooks can be tightened to a maximum position of approximately 70°. As a result thereof, after the machine has been adjusted to the working position, they fall automatically back to an active position in response to the force of gravity. So as to render operation in the active position possible, the ends of the hooks 33 are provided with a bevelled end. This causes the hooks to be lifted by the pawl 35 when the lateral frame portions 13, 14 are withdrawn, whereafter they drop by means of their recessed portion over the pawl 35 into a locking state on further pivoting of the lateral frame portions 13, 14, under the action of the force of gravity.

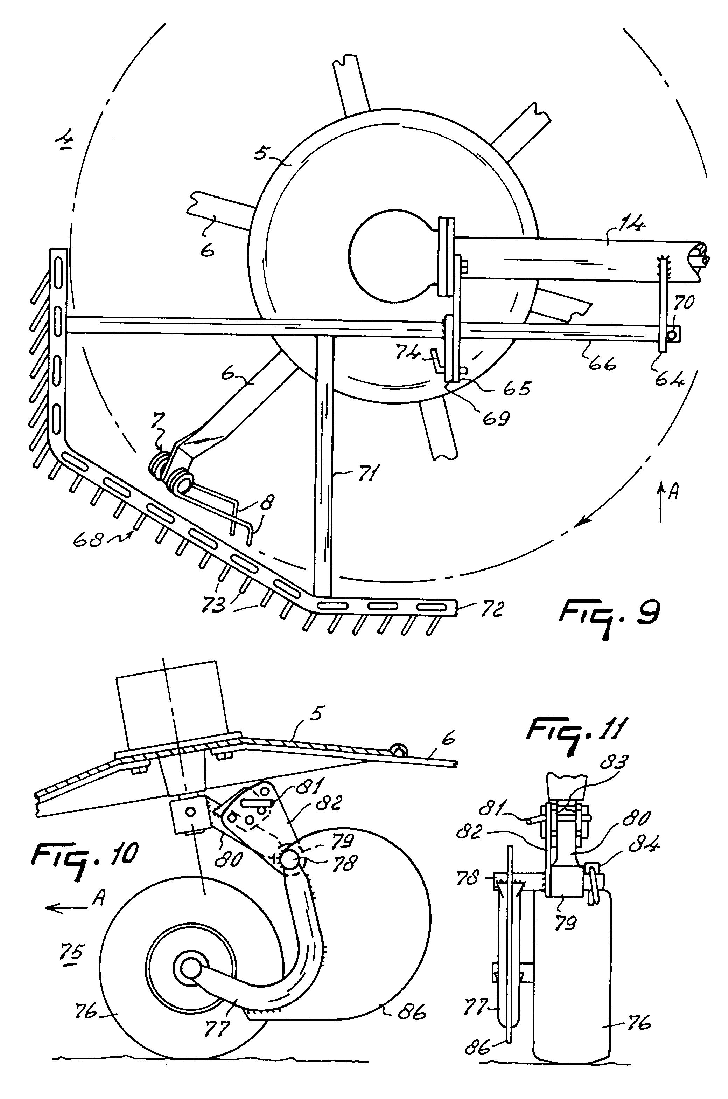

Figure 9 is a detailed plan view of a shielding and raking member 68 which, in accordance with a preferred embodiment of the invention, can be used at the end of a machine 1. In accordance with a preferred embodiment of the invention, this member is intended for limiting the laterally directed tedding of crop by the relevant outermost rotor 4. Attached to the outermost lateral frame portion 14 of the machine there are lug-shaped supports 64 and 65, which have been provided with a bore. These bores are of such a nature that a tubular frame arm 66, which extends horizontally and parallel to the frame 2, is pivotal therein. The arm 66 is limited, on the one hand, against axial shift by a lug 69 which is disposed on this arm 66 and bears against the exterior side of the outermost support 65. On the other hand, the arm 66 is limited with the aid of a tensioning pin 70 which, at that side of the more inwardly positioned support 64 that faces the imaginary central plane M of the machine 1, is passed through the arm 66. The arm 66 constitutes together with a branched-off arm portion 71 and a carrier 72 for rake elements 73 a frame for the shielding member 68. The rake elements 73 are connected with a mutual spacing of approximately 4 cms to the carrier 72 in such a manner that they extend predominantly downwardly and somewhat rearwardly. In the present embodiment, two tines 73 are invariably made of one integral piece by passing them in the shape of a U through bores provided for the purpose in the carrier 72. The tines 73, which in the working position of the shield 68 reach to as far as the soil, are in the present embodiment made of spring steel and, in a preferred embodiment, are provided with an extension made of synthetic resin material. This extension is pushed over the end of the tines 73. The outermost support 65 and the adjacent lug 69 on the arm 66 have several bores, in such a manner that, using a locking pin 74, the shielding member 68 is located in its working position predominantly behind the outermost rotor 4. In a non-operative position, the shielding member 68 can be locked above the rotor 4 in e.g. a position rotated through 90°.

Figures 10 and 11 show a construction for a supporting member 75, consisting of a wheel 76 having a tire and a rim, on whose shaft a supporting leg 77, 80 is fastened. The supporting leg 77, 80 includes a curved lower leg portion 77 which, via a shaft 78 disposed transversely to this leg portion 77, is pivotally supported in a bush 79 of an upper leg portion 80. Setting the height of the wheel 75 with respect to the rotor 4 is effected in an obvious manner using a locking pin 81, which can be passed through bores made in both a plate 82 attached to the lower leg portion 77 and in plates 83 attached to the upper leg portion 80. In accordance with the invention, the horizontal shaft 78 of the lower leg portion 77 is locked against axial shift in the bush 79 with the aid of the aforementioned plate 82 and with the aid of a detachable quick-acting locking pin 84 passed at the other side of the bush 79 through the shaft 78. Attached against the trailing side of the lower leg portion 77 there is arranged, also in accordance with the invention, a plate section 86 which extends vertically and in the direction of travel A. This plate section 86 has rounded-off contours. The plate 86 has an upper rim portion which is located at a level higher than the wheel 76, a lower rim portion which extends approximately in the region of the flange of the wheel 76 and a trailing rim portion which, taken in a line perpendicular to a local line of contact, is located at least 10 cms and, preferably, at least 20 cms from the trailing side of a leg portion 77.

The mode of operation of the machine is described hereafter.

In the position shown in Figure 1, the hay-making machine is in the outwardly folded state. In the working position, the machine slightly leans forward, e.g. in the manner as shown in the side view of Figure 10. For adjusting the machine to the transport position, the hydraulic adjusting cylinder 16 is operated from the tractor in such a manner that it retracts the cylinder rod 49. As the point of contact of the cylinder 16 on the right-hand lateral frame portion 13, 14 is located, relative to in the first place the pivot shaft 22 and in the second place the pivot shaft 12, at a higher level than the point of contact on the facing lateral frame portion 13, 14, the moment required for pivoting a lateral frame portion 13, 14 to the transport position requires at the right-hand side of the present machine a smaller force than at the left-hand machine side with the rocking member 20. Because of this difference in the required force, the adjusting cylinder 16 pushes itself off, after having been operated, from the lateral frame portion with the rocking member 20, and first the right-hand lateral frame portion is pivoted to the transport position and only thereafter the lateral frame portion shown at the left.

In the transport position shown in Figure 2, the adjusting cylinder 16 has both ends connected at at least substantially equal heights to the two rocking members 20, 21. Consequently, from this state, after having been unlocked, there is, at least initially, no given sequence in which the lateral frame portions are folded out relative to each other. It is, however, of importance that the right-hand lateral frame portion which, in the outwardly folded state has the longest coupling arm, is lowered last in the sequence: in practice, it appeared to be possible that the force necessary for the moment required for pivoting a lateral frame portion 13, 14 is produced on pivoting of the left-hand lateral frame portion. As a result thereof, in practice, the already fully folded-out right-hand lateral frame portion suddenly pivots back to the semi-folded state, and that whilst the left-hand lateral frame portion simultaneously pivots through to a fully outwardly folded position. Such an effect, which in view of possible bystanders and for reaction forces to be produced in the machine and in the coupling thereof is unwanted, is avoided, in accordance with the invention, by first having the frame portion with the smallest coupling arm 20, in the present embodiment the left-hand lateral frame portion, pivot to a fully folded-out position and only thereafter the lateral frame portion with the largest coupling arm.

In the embodiment including the force member 36 shown in detail in Figure 3, the two locking hooks 33 are simultaneously pulled from their locked state and, with the aid of the force member 36 connected to the frame 10, an additional force is exercised on the left-hand lateral frame portion. This force is produced by the spring tension built-up in the force member during the pivotal motion to the transport position. In response to this additional force, the force to be exercised by the cylinder 16 on the pivot shaft 26 is less than the force exercised on the pivot shaft 27, so that the cylinder 16 pushes off from the latter during its outward stroke. After the action of the force member 36 has ended, the pivot shaft 26 has arrived at such a height above the pivot shaft 27 with respect to the pivot shafts 12 that, at the side including the pivot shaft 26, a smaller force is still required for producing the pivoting moment. As a result thereof, the adjusting element 16 being continuously operated, the left-hand lateral frame portion 13, 14 is always folded outwardly first and only thereafter the right-hand lateral frame portion.

In the embodiment shown in Figures 6 to 8, this sequence is realized with the aid of the sequence which is built-in in the construction described and which is realized during operation of the cord 61 acting on the locking device.

Both the above-mentioned embodiments can be operated, in accordance with the invention, with the aid of the central control device 40 shown in Figure 4. The construction of the control device 40 has the advantage that both locking hooks 33 can be uniformly operated in a simple manner, that the imaginary arm between the point in which the cord 46 is tied to the control arm 45 and the pivot shaft 41 is relatively long with respect to the arm between the pivot shaft 41 and the bore 43, so that the force to be produced for unlocking is greatly reduced, and that the risk that the hooks 33 do not drop back to the locking position is reduced by the presence of the spring element 44.

The use of one single adjusting cylinder 16 floating between the rocker members 20 and 21 is advantageous from an economic point of view, but entails that the cylinder 16 must bridge a relatively great length, more particularly at least the length of the central frame portion 10. In a greatly extended state of the cylinder, this may have for its consequence, in the case of an excessive load intended for further extension, that there is a risk of damage, e.g. buckling of the cylinder. This risk occurs more specifically when the cylinder is operated with a great amount of power, which is applied from the tractor and is attuned to pivoting to the transport state, and the machine is already in a fully hinged-outward or folded-outward state. In accordance with the invention, this risk is limited in an advantageous manner by providing between the two cylinder chambers 52 and 53 an overpressure valve 57 in the piston 50, which preferably already becomes operative at a pressure which is only slightly higher than the pressure required for folding a single lateral frame portion 13, 14 outwards. In the present embodiment, the overpressure valve 57 is incorporated in the spacer element 51 which is screwable in the piston 50. In the present embodiment, the valve becomes operative at a pressure of approximately 50 bar, which is considerably less than the pressure of approximately 150 bar required in the cylinder chamber 53 for having a lateral frame portion pivot upwardly.

Figure 9 shows a construction in accordance with the invention, intended for use on field edges. In the operating position, i.e. the position in which the arms 71, 66 define a predominantly horizontal plane, the shielding member 68 prevents crop accumulated in the initial part of the trajectory of a rotor or raked-away crop from being thrown at the rear side in a purely lateral direction, i.e. in the longitudinal direction of the frame 2, as a result of which it might be flung into the ditch or onto an adjacent road. During operation, the tines 73 of the shield 68 extend to as far as the soil, so that any crop dropped from the rotor tines 8 is taken along by the machine. This crop can then be picked-up by a subsequent rotor tine 8 or tine group 7 and be taken along as soon as the volume of the dropped-off quantity is sufficiently large. The shield 68 and the carrier 72 thereof predominantly track the peripheral path described by a tine group 7 during operation.

Figures 10 and 11 show three constructions, in accordance with the invention, which contribute towards reduced blocking of the wheels 76. This blocking is very often the result of piling-up of crop residues between a wheel 76 and the associated lower leg portion 77. A first measure relates to the shape of the lower leg portion 77, which from the wheel axis to at least beyond the rim of the wheel 76 extends rearwardly and slightly downwardly, in such a manner that an acute angle with a horizontal through the shaft of the wheel 76 is obtained. The remaining portion of the lower leg portion 77 predominantly extends upwardly. Any crop landing against the leg 77 glides towards the wheel circumference because of the position and shape of the lower leg portion 77. In this place, crop residues can pile up only to a maximum size, because, after exceeding this maximum size, they drag along the ground or rub against the side of the tire. In both cases, the piled-up crop residues are easily deposited.

Two other measures anticipate the nature of the crop and the effect thereof on the mode of operation of the machine. The nature of the crop is mainly determined by the moistness of the crop, the length of the crop, by the kind of crop which determines factors such as the hairiness of the crop surface and the wax layer thereon, and by the moment when the crop is harvested: in the case of grass, the spring crop is usually of a firmer texture than the autumn crop. In many cases, the instant of harvesting is the most dominating factor. In accordance with the invention, it has been found that, generally, spring crop and relatively short and dry crop is flung at the leading side of the machine into an adjacent rotor. There it lands inter alia against the lower leg portion 77 and the wheel 76. The same effect occurs, generally, in the autumn and with relatively long and moist crop at the trailing side of the machine. So as to have as little crop as possible strike the lower leg portion 77, it is important, in accordance with the invention, for the lower leg portion 77 to be disposed at that side of the wheel 76 where it is as it were shielded against crop flung into the rotor. The side where the lower leg portion 77 is screened-off is different, in line with the above exposition, in spring and autumn and in accordance with other circumstances. In order to be able to act adequately in response to the circumstances, it is therefore important, in accordance with the invention, that the shaft 78 of the lower leg portion 77 is not locked, as is customary, by using e.g. a tensioning pin in a quasi-permanent manner against axial shift in the bush 79 of the upper leg portion 80, but precisely with an easily detachable locking element, such as the quick-acting locking pin 84 shown in Figure 11. Because of this measure, the lower supporting portions, i.e. the wheel 76 and the lower leg portion 77, depending on the circumstances, can be exchanged as an integral unit for the lower supporting portion of an adjacent working member 4. Consequently, the lower leg portion 77 is always positioned at the most advantageous side of a wheel 76. By using the quick-acting locking pin 84 in the described position in the machine, a practical interchangeability is realized, i.e. an interchangeability which does not entail financial cost or consumption of time, and does not require the availability of tools.

The configuration of Figure 1 shows schematically an arrangement of the wheel supports 77, which arrangement is eminently suitable for tedding spring crop or relatively dry crop with short blades: in the case of two co-operating rotors, e.g. the pair of rotors 4 shown at the extreme left-hand side in Figure 1, tufts of crop are always flung inwards at the outer rotor 4 by the complementary rotor. Therefore, the lower leg portion 77 is located at the outer rotor, taken in the view of Figure 1, at the left-hand side of the wheel and at the complementary rotor, i.e. the penultimate rotor at the left-hand side, at the right-hand side of the wheel. In autumn or under conditions of relatively long and wet crop, the lower leg portions 77 must be interchanged such that at least at the penultimate left-hand rotor the lower leg portion 77 is located at the left-hand side of the wheel. In this manner, it is shielded to a considerable extent against flinging-in of crop by the antepenultimate left-hand working member 4.

A third contribution to reducing the piling-up effect of crop between the lower leg portion 77 and the wheel 76 is constituted by the plate or fin 86, which is disposed in the midway point against the trailing side of the lower leg portion 77, which in the present embodiment is of a tubular shape. The plate 86 is predominantly located in, or at least parallel to, the imaginary plane defined by the curved lower leg portion 77. The plate 86 increases the surface area of that portion of the lower leg portion 77 that extends to beyond the wheel 76 in such a way that crop residues, which land against that portion of the lower leg portion 77 that is not shielded by the wheel 76, cannot wrap themselves anymore around the lower leg portion 77 and consequently are passed to the soil. In accordance with the invention, the plate section 86 is disposed at least against that portion of the lower leg portion 77 that extends beyond the circumference of the wheel 76 and at least against the predominantly vertically oriented portion thereof.

The invention is not limited to the above-described features, but also relates to all the details shown in the drawings. The invention further relates to all kinds of alternatives in the construction, of course falling within the wordings of the following claims.

## Claims

1. An agricultural machine, having an elongate frame (2) which comprises a central frame portion (10) and, on both sides thereof, lateral frame portions (13, 14) which are pivotal about pivot shafts (12) positioned transversely to the longitudinal direction and are interconnected by a hydraulic adjusting cylinder (16) which by means of each of its ends, via a respective intermediate element (20, 21) and a respective pivot shaft (22) is connected with the respective frame portions (13, 14), **characterized in that** each intermediate element (20, 21) is constituted by a rocking member (20, 21) which is pivotal in two spaced-apart points, the said interconnection of the hydraulic adjusting cylinder (16) with said intermediate elements (20, 21) being floating, while the points of connection of the adjusting cylinder (16) with the intermediate elements (20, 21) are arranged, in the outwardly folded state of the machine, at different height levels with respect to the imaginary line through the pivot shafts (12) in the frame (10), the arrangement being such that on operating the adjusting cylinder (16), always one lateral frame portion (13, 14) is pivoted to an upward position prior to the other one.

2. An agricultural machine as claimed in claim 1, characterized in that the machine is a haymaking machine and includes working members for tedding and/or raking crop, whilst a lateral frame portion (13, 14) includes at least two working members (4).

3. An agricultural machine as claimed in claim 1 or 2, characterized in that the intermediate element (20, 21) has one end connected in the region of the pivot shaft (12) in the frame (2) to the relative lateral frame portion (13), capably of pivoting about a shaft (22).

4. An agricultural machine as claimed in one or more of the preceding claims, characterized in that the intermediate element (20, 21) includes a third pivot point having a pivot shaft (25), in which a further connecting element (23) pivotally connected to an outermost lateral frame portion (14) is pivotally coupled.

5. An agricultural machine as claimed in one or more of the preceding claims, characterized in that the outermost frame portion (14) includes a bracket (18) which has a slotted hole, in which a further connecting element (23) is pivotally incorporated via a pivot shaft (24).

6. An agricultural machine as claimed in one or more of the preceding claims, characterized in that the bracket (18) extends to beyond the pivot shaft (15) between the relevant outermost and the relevant innermost lateral frame portion (13 and 14, respectively), and a bevelled end of which constitutes a stop for a transport position of the machine, the construction being such that a further pivotal motion of the lateral frame portions (13, 14) is inhibited.

7. An agricultural machine as claimed in one or more of the preceding claims, characterized in that the adjusting cylinder (16), the intermediate element (20, 21) and the further connecting rod (23) are arranged outside the frame (2) and predominantly extend in the longitudinal direction of the frame (2).

8. An agricultural machine as claimed in one or more of the preceding claims, characterized in that the machine includes an intermediate element (21), whilst the spacing between the pivot shaft (22) located in its connection to the lateral frame portion (13, 14) and the pivot shaft (26, 27) located in the connecting point thereof to the adjusting cylinder (16) exceeds the spacing between said pivot shafts in the facing intermediate element (20).

9. An agricultural machine as claimed in one or more of the preceding claims, characterized in that, in the outwardly folded state of the machine (1), the imaginary line through the shafts (22, 26, 27) which form the connection of an intermediate element (20, 21) to the frame (2) and with the adjusting cylinder (16), respectively, encloses an angle of approximately 45° with the frame (2).

10. An agricultural machine as claimed in one or more of the preceding claims, characterized in that, in the transport position of the machine (1), the imaginary line through the shafts (22, 26, 27) which form the connection between an intermediate element (20, 21) to the frame and to the adjusting cylinder (16), respectively, encloses an angle of approximately 30° with a horizontal line.

11. An agricultural machine as claimed in one or more of the preceding claims, characterized in that an intermediate element (21) is of such a shape that, in the outwardly folded state, the pivot shaft (27) in the point of connection between the adjusting cylinder (16) and the intermediate element (21) with the largest distance between said pivot shaft (27) and the pivot shaft (22) in the connection to the lateral frame portion (13, 14), in the outwardly folded state of the machine, is located at approximately the same height or at least at a higher level with respect to the frame (2) than the connecting shaft (25) from the connection to the further connecting rod (23).

12. An agricultural machine as claimed in one or more of the preceding claims, characterized in that an intermediate element (21) is of such a shape that, in the outwardly folded state, the pivot shaft (27) in the point of connection between the adjusting cylinder (16) and the intermediate element (21) with the smallest distance between said pivot shaft (27) and the pivot shaft (22) in the connection to the lateral frame portion (13, 14) is located, in the outwardly folded state of the machine, at approximately the same height or at least at a lower level with respect to the frame (2) than the connecting shaft (25) of the connection to the further connecting rod (23).

13. An agricultural machine as claimed in one or more of the preceding claims, characterized in that the machine includes locking hooks (33) which, for the purpose of locking the machine in a transport position, can hook around a pawl (35) disposed on the innermost lateral frame portion (13).

14. An agricultural machine as claimed in one or more of the preceding claims, characterized in that the locking hooks (33) are pivotally connected to a predominantly horizontally extending carrier (31) of a trestle (3) provided on the central frame portion (10).

15. An agricultural machine as claimed in one or more of the preceding claims, characterized in that the machine can reach a transport position, in which the innermost lateral frame portions (13) can be locked in a predominantly vertical position and the outermost lateral frame portions (14) enclose an angle of approximately 135° with the relevant innermost lateral frame portion (13).

16. An agricultural machine in accordance with one or more of the preceding claims, characterized in that the machine includes means (36, 62, 51), with the aid of which, to obtain the outwardly folded state of the machine, always one lateral frame portion (13, 14) is adjusted from the transport position to a fully outwardly folded state prior to the facing lateral frame portion.

17. An agricultural machine as claimed in one or more of the preceding claims, characterized in that always the frame portion (13, 14) which via the intermediate element (20) having the shortest distance between the pivot shafts (22, 26, 27) which connect this intermediate element (20) to the relevant lateral frame portion (13, 14) and the adjusting cylinder (16), respectively, is first adjusted to the outwardly folded state of the machine.

18. An agricultural machine as claimed in one or more of the preceding claims, characterized in that the means are constituted by a push-out member (36), which is connected to the central frame portion (10) and is operative with respect to only one lateral frame portion of the machine.

19. An agricultural machine as claimed in one or more of the preceding claims, characterized in that a lateral frame portion (13) incorporates in the region of a pawl (35) intended for locking the machine a stop element (62), which in the transport position of the machine limits the deflection of the relevant locking hook (33).

20. An agricultural machine as claimed in one or more of the preceding claims, characterized in that the locking hooks (33) are operable from the driver's seat by means of a control cord (34, 46, 61) passed along the central frame portion (10).

21. An agricultural machine as claimed in one or more of the preceding claims, characterized in that the control cord (61) branches out in the direction towards the locking hooks (33) into two portions of unequal length, whilst the branched-off cord portion (58) that extends to the locking hook is in the region of the stop element (62) so much shorter than the cord portion (59) leading to the facing locking hook (33) that operating the cord (61) to as far as the stop of a locking hook (33) against the stop (62) does not cause the opposite locking hook (33) to be unlocked.

22. An agricultural machine in accordance with one or more of the preceding claims, characterized in that the machine comprises an adjusting cylinder (16), whose piston (50) includes a pressure limiting element (57).

23. An agricultural machine as claimed in one or more of the preceding claims, characterized in that the pressure limiter (57) has been provided such that it is only active with respect to the pressure in the cylinder chamber (51) without the piston rod (49).

24. An agricultural machine as claimed in one or more of the preceding claims, characterized in that the pressure required for moving the piston rod outwards from the cylinder (16) is limited by the pressure limiter (57) to a maximum of approximately 1/3 of the pressure required for retracting the adjusting cylinder (16), and more in particular is limited to a maximum of approximately 50 bar.

25. An agricultural machine as claimed in one or more of the preceding claims, characterized in that the machine includes working members (4) for tedding crop lying on the soil and is provided at at least one end with a shielding member (68), with the aid of which the lateral tedding of crop is limited.

26. An agricultural machine as claimed in one or more of the preceding claims, characterized in that, in the operating position, the shield (68) extends into the rearmost and outermost quarter of the relevant working member predominantly along the peripheral line thereof, and predominantly in the vertical direction.

27. An agricultural machine as claimed in one or more of the preceding claims, characterized in that the shield (68) extends to the rear side of the relevant working member (4) to beyond the imaginary centre line, which extends in the direction of operative travel, towards the midway point of the machine.

28. An agricultural machine as claimed in one or more of the preceding claims, characterized in that the shielding member (68) is constituted by mainly vertically extending tines (73), made of resilient material, such as spring steel or synthetic resin material.

29. An agricultural machine as claimed in one or more of the preceding claims, characterized in that the tines (73) of the shielding member (68) reach during operation to as far as the soil, so that the tines (73) perform a raking function.

30. An agricultural machine as claimed in one or more of the preceding claims, characterized in that the shielding member (68) is arranged such that it is pivotal and lockable about a pivot shaft (66) to and in at least a working position and a transport position.

31. An agricultural machine as claimed in one or more of the preceding claims, characterized in that the machine includes a supporting member comprising a wheel (76) and a supporting leg (77, 80), to which plate material (86) is attached to increase its surface area.

32. An agricultural machine as claimed in one or more of the preceding claims, characterized in that the plate material (86) is attached in the direction of operative travel (A).

33. An agricultural machine as claimed in one or more of the preceding claims, characterized in that the plate material is constituted by a metal plate section (86), which is attached to the trailing side of the supporting leg (77, 80).

34. An agricultural machine as claimed in one or more of the preceding claims, characterized in that the metal plate section has an upper rim which extends to at least the upper end of a relevant leg portion (77) and a trailing edge which, taken in a line perpendicular to a local contact line, is located at least 15 cms from the trailing side of the supporting leg (77, 80).

35. An agricultural machine as claimed in one or more of the preceding claims, characterized in that the metal plate section (86) is attached at least to that portion of the relevant supporting leg portion (77) that, taken in a side view, does not overlap the wheel (76).

36. An agricultural machine as claimed in one or more of the preceding claims, characterized in that the supporting leg (77, 80) of the supporting member (75) includes an upper portion (80) and a lower portion (77) which via a pivot shaft (78) is pivotal in a bush (79) extending transversely to the longitudinal direction of the upper leg portion (80) and being attached thereto, and is locked therein inter alia with the aid of a quick-acting locking element (84) against axial shift and, because of the presence of this quick-acting locking element (84), can furthermore be removed directly from the bush (79).

## Patentansprüche

1. Landwirtschaftliche Maschine mit einem langgestreckten Rahmen (2), der einen zentralen Rahmenteil (10) und beiderseits desselben seitliche Rahmenteile (13, 14) umfaßt, die um quer zur Längsrichtung angeordnete Schwenkachsen (12) schwenkbar und durch einen hydraulischen Stellzylinder (16) verbunden sind, der an jedem seiner Enden über ein entsprechendes Zwischenelement (20, 21) und eine entsprechende Schwenkachse (22) mit den jeweiligen Rahmenteilen (13, 14) verbunden ist, dadurch gekennzeichnet, daß jedes Zwischenelement (20, 21) durch einen Schwinghebel (20, 21) gebildet ist, der um zwei auf Abstand liegende Punkte schwenkbar ist, wobei die Verbindung des hydraulischen Stellzylinders (16) mit den Zwischenelementen (20, 21) beweglich ist, wobei die Verbindungsstellen des Stellzylinders (16) mit den Zwischenelementen (20, 21) im nach außen geklappten Zustand der Maschine in bezug auf die gedachte Linie durch die Schwenkachsen (12) im Rahmen (10) in unterschiedlicher Höhe liegen, wobei die Anordnung so getroffen ist, daß bei Betätigung des Stellzylinders (16) immer ein seitlicher Rahmenteil (13, 14) vor dem anderen in eine aufrechte Lage geschwenkt wird.

2. Landwirtschaftliche Maschine nach Anspruch 1, dadurch gekennzeichnet, daß die Maschine eine Heuwerbungsmaschine ist und Bearbeitungsglieder zum Zetten und/oder Rechen von Erntegut aufweist, wobei ein seitlicher Rahmenteil (13, 14) mindestens zwei Bearbeitungsglieder (4) aufweist.

3. Landwirtschaftliche Maschine nach Anspruch 1 oder 2, dadurch gekennzeichnet, daß das Zwischenelement (20, 21) an einem Ende im Bereich der Schwenkachse (12) im Rahmen (2) um eine Achse (22) schwenkbar mit dem jeweiligen seitlichen Rahmenteil (13) verbunden ist.

4. Landwirtschaftliche Maschine nach einem oder mehreren der vorhergehenden Ansprüche,
dadurch gekennzeichnet, daß das Zwischenelement (20, 21) einen dritten Schwenkpunkt mit einer Schwenkachse (25) aufweist, an dem ein weiteres Verbindungselement (23), das mit einem äußeren seitlichen Rahmenteil (14) schwenkbar verbunden ist, schwenkbar angebracht ist.

5. Landwirtschaftliche Maschine nach einem oder mehreren der vorhergehenden Ansprüche,
dadurch gekennzeichnet, daß der äußere Rahmenteil (14) einen Bügel (18) mit einer schlitzförmigen Öffnung aufweist, in der ein weiteres Verbindungselement (23) über eine Schwenkachse (24) schwenkbar angeordnet ist.

6. Landwirtschaftliche Maschine nach einem oder mehreren der vorhergehenden Ansprüche,
dadurch gekennzeichnet, daß der Bügel (18) über die Schwenkachse (15) hinaus bis zwischen den jeweiligen äußeren und den jeweiligen inneren seitlichen Rahmenteil (14 bzw. 13) reicht und ein abgeschrägtes Ende des Bügels einen Anschlag für eine Transportlage der Maschine bildet, wobei die Konstruktion so gewählt ist, daß eine weitere Schwenkbewegung der seitlichen Rahmenteile (13, 14) verhindert wird.

7. Landwirtschaftliche Maschine nach einem oder mehreren der vorhergehenden Ansprüche,
dadurch gekennzeichnet, daß der Stellzylinder (16), das Zwischenelement (20, 21) und die weitere Verbindungsstange (23) außerhalb des Rahmens (2) angeordnet sind und sich überwiegend in Längsrichtung des Rahmens (2) erstrecken.

8. Landwirtschaftliche Maschine nach einem oder mehreren der vorhergehenden Ansprüche,
dadurch gekennzeichnet, daß die Maschine ein Zwischenelement (21) aufweist, wobei der Abstand zwischen der Schwenkachse (22) an seiner Verbindung mit dem seitlichen Rahmenteil (13, 14) und der Schwenkachse (26, 27) an seiner Verbindungsstelle mit dem Stellzylinder (16) größer ist als der Abstand zwischen den Schwenkachsen in dem gegenüberliegenden Zwischenelement (20).

9. Landwirtschaftliche Maschine nach einem oder mehreren der vorhergehenden Ansprüche,
dadurch gekennzeichnet, daß im nach außen geklappten Zustand der Maschine (1) die gedachte Linie durch die Achsen (22, 26, 27), die die Verbindung eines Zwischenelementes (20, 21) mit dem Rahmen (2) bzw. mit dem Stellzylinder (16) bilden, einen Winkel von etwa 45° mit dem Rahmen (2) bildet.

10. Landwirtschaftliche Maschine nach einem oder mehreren der vorhergehenden Ansprüche,
dadurch gekennzeichnet, daß in der Transportlage der Maschine (1) die gedachte Linie durch die Achsen (22, 26, 27), die die Verbindung zwischen einem Zwischenelement (20, 21) und dem Rahmen bzw. dem Stellzylinder (16) bilden, einen Winkel von etwa 30° mit einer Horizontalen bildet.

11. Landwirtschaftliche Maschine nach einem oder mehreren der vorhergehenden Ansprüche,
dadurch gekennzeichnet, daß ein Zwischenelement (21) eine solche Form aufweist, daß im nach außen geklappten Zustand die Schwenkachse (27) an der Verbindungsstelle zwischen dem Stellzylinder (16) und dem Zwischenelement (21), das den größten Abstand zwischen der Schwenkachse (27) und der Schwenkachse (22) an der Verbindung mit dem seitlichen Rahmenteil (13, 14) aufweist, im nach außen geklappten Zustand der Maschine etwa in derselben Höhe oder zumindest in einer höheren Lage in bezug auf den Rahmen (2) angeordnet ist als die Verbindungsachse (25) an der Verbindung mit der weiteren Verbindungsstange (23).

12. Landwirtschaftliche Maschine nach einem oder mehreren der vorhergehenden Ansprüche,
dadurch gekennzeichnet, daß ein Zwischenelement (21) eine solche Form aufweist, daß im nach außen geklappten Zustand die Schwenkachse (27) an der Verbindungsstelle zwischen dem Stellzylinder (16) und dem Zwischenelement (21), das den kleinsten Abstand zwischen der Schwenkachse (27) und der Schwenkachse (22) an der Verbindung mit dem seitlichen Rahmenteil (13, 14) aufweist, im nach außen geklappten Zustand der Maschine etwa in derselben Höhe oder zumindest in einer niedrigeren Lage in bezug auf den Rahmen (2) angeordnet ist als die Verbindungsachse (25) an der Verbindung mit der weiteren Verbindungsstange (23).

13. Landwirtschaftliche Maschine nach einem oder mehreren der vorhergehenden Ansprüche,
dadurch gekennzeichnet, daß die Maschine Verriegelungshaken (33) aufweist, die zum Verriegeln der Maschine in einer Transportlage eine Sperrklinke (35) umgreifen können, die am inneren seitlichen Rahmenteil (13) angeordnet ist.

14. Landwirtschaftliche Maschine nach einem oder mehreren der vorhergehenden Ansprüche,
dadurch gekennzeichnet, daß die Verriegelungshaken (33) mit einem überwiegend horizontal ausgerichteten Träger (31) eines Anbaubockes (3) schwenkbar verbunden sind, der an dem zentralen Rahmenteil (10) angeordnet ist.

15. Landwirtschaftliche Maschine nach einem oder mehreren der vorhergehenden Ansprüche,
dadurch gekennzeichnet, daß die Maschine in eine Transportlage gelangen kann , in der die inneren seitlichen Rahmenteile (13) in einer überwiegend vertikalen Position verriegelbar sind und die äußeren seitlichen Rahmenteile (14) mit dem jeweiligen inneren seitlichen Rahmenteil (13) einen Winkel von etwa 135° bilden.

16. Landwirtschaftliche Maschine nach einem oder mehreren der vorhergehenden Ansprüche,
dadurch gekennzeichnet, daß die Maschine Vorrichtungen (36, 62, 51) aufweist, mittels derer zur Einstellung der Maschine in die nach außen geklappte Lage stets ein seitlicher Rahmenteil (13, 14) vor dem gegenüberliegenden seitlichen Rahmenteil aus der Transportlage in eine ganz nach außen geklappte Lage eingestellt wird.

17. Landwirtschaftliche Maschine nach einem oder mehreren der vorhergehenden Ansprüche,
dadurch gekennzeichnet, daß stets der Rahmenteil (13, 14) mit dem Zwischenelement (20), das den kürzesten Abstand zwischen den Schwenkachsen (22, 26, 27) aufweist, die dieses Zwischenelement (20) mit dem jeweiligen seitlichen Rahmenteil (13, 14) bzw. dem Stellzylinder (16) verbinden, zuerst in die nach außen geklappte Lage der Maschine eingestellt wird.

18. Landwirtschaftliche Maschine nach einem oder mehreren der vorhergehenden Ansprüche,
dadurch gekennzeichnet, daß die Vorrichtungen durch ein Druckglied (36) gebildet sind, das mit dem zentralen Rahmenteil (10) verbunden und nur an einem seitlichen Rahmenteil der Maschine wirksam ist.

19. Landwirtschaftliche Maschine nach einem oder mehreren der vorhergehenden Ansprüche,
dadurch gekennzeichnet, daß ein seitlicher Rahmenteil (13) im Bereich einer Sperrklinke (35) zum Verriegeln der Maschine ein Anschlagelement (62) aufweist, das in der Transportlage der Maschine die Auslenkung des betreffenden Verriegelungshakens (33) begrenzt.

20. Landwirtschaftliche Maschine nach einem oder mehreren der vorhergehenden Ansprüche,
dadurch gekennzeichnet, daß die Verriegelungshaken (33) vom Fahrersitz aus mittels eines Steuerseiles (34, 46, 61) betätigbar sind, das an dem zentralen Rahmenteil (10) entlanggeführt ist.

21. Landwirtschaftliche Maschine nach einem oder mehreren der vorhergehenden Ansprüche,
dadurch gekennzeichnet, daß sich das Steuerseil (61) in Richtung auf die Verriegelungshaken (33) in zwei Abschnitte unterschiedlicher Länge aufteilt, wobei der abzweigende Seilabschnitt (58), der sich zu dem Verriegelungshaken erstreckt, im Bereich des Anschlagelementes (62) so viel kürzer als der zum gegenüberliegenden Verriegelungshaken (33) führende Seilabschnitt (59) ist, daß das Betätigen des Seiles (61) bis zum Anliegen eines Verriegelungshakens (33) an dem Anschlag (62) nicht zur Folge hat, daß der gegenüberliegende Verriegelungshaken (33) entriegelt wird.

22. Landwirtschaftliche Maschine nach einem oder mehreren der vorhergehenden Ansprüche,
dadurch gekennzeichnet, daß die Maschine einen Stellzylinder (16) umfaßt, dessen Kolben (50) ein Druckbegrenzungselement (57) enthält.

23. Landwirtschaftliche Maschine nach einem oder mehreren der vorhergehenden Ansprüche,
dadurch gekennzeichnet, daß der Druckbegrenzer (57) derart angeordnet ist, daß er nur im Hinblick auf den Druck in der Zylinderkammer (52) ohne die Kolbenstange (49) wirksam ist.

24. Landwirtschaftliche Maschine nach einem oder mehreren der vorhergehenden Ansprüche,
dadurch gekennzeichnet, daß der zum Ausfahren der Kolbenstange aus dem Zylinder (16) erforderliche Druck von dem Druckbegrenzer (57) auf ein Maximum von etwa 1/3 des Druckes begrenzt wird, der zum Einfahren des Stellzylinders (16) erforderlich ist, und insbesondere auf ein Maximum von etwa 50 bar begrenzt wird.

25. Landwirtschaftliche Maschine nach einem oder mehreren der vorhergehenden Ansprüche,
dadurch gekennzeichnet, daß die Maschine Bearbeitungsglieder (4) zum Zetten von auf dem Boden liegendem Erntegut aufweist und an mindestens einem Ende mit einem Abschirmelement (68) versehen ist, mittels dessen das seitliche Zetten von Erntegut begrenzt wird.

26. Landwirtschaftliche Maschine nach einem oder mehreren der vorhergehenden Ansprüche,
dadurch gekennzeichnet, daß sich die Abschirmung (68) in der Arbeitslage im hinteren äußeren Viertel des jeweiligen Bearbeitungsgliedes im wesentlichen entlang dessen Peripherie und im wesentlichen in vertikaler Richtung erstreckt.

27. Landwirtschaftliche Maschine nach einem oder mehreren der vorhergehenden Ansprüche,
dadurch gekennzeichnet, daß sich die Abschirmung (68) zur Rückseite des jeweiligen Bearbeitungsgliedes (4) bis über die gedachte Mittellinie hinaus erstreckt, welche sich in Fahrtrichtung zum Mittelpunkt der Maschine erstreckt.

28. Landwirtschaftliche Maschine nach einem oder mehreren der vorhergehenden Ansprüche,
dadurch gekennzeichnet, daß das Abschirmelement (68) durch überwiegend vertikal ausgerichtete Zinken (73) gebildet ist, die aus einem elastischen Material, wie z. B. Federstahl oder Kunstharzmaterial, hergestellt sind.

29. Landwirtschaftliche Maschine nach einem oder mehreren der vorhergehenden Ansprüche,
dadurch gekennzeichnet, daß die Zinken (73) des Abschirmelementes (68) im Betrieb bis zum Boden reichen, so daß die Zinken (73) eine Rechfunktion ausüben.

30. Landwirtschaftliche Maschine nach einem oder mehreren der vorhergehenden Ansprüche,
dadurch gekennzeichnet, daß das Abschirmelement (68) derart angeordnet ist, daß es um eine Schwenkachse (66) schwenkbar und in mindestens einer Arbeitslage und einer Transportlage verriegelbar ist.

31. Landwirtschaftliche Maschine nach einem oder mehreren der vorhergehenden Ansprüche,
dadurch gekennzeichnet, daß die Maschine ein Stützglied aufweist, das ein Rad (76) und ein Stützbein (77, 80) umfaßt, an dem zur Vergrößerung seiner Oberfläche ein Flachteil (86) angebracht ist.

32. Landwirtschaftliche Maschine nach einem oder mehreren der vorhergehenden Ansprüche,
dadurch gekennzeichnet, daß das Flachteil (86) in Fahrtrichtung (A) angeordnet ist.

33. Landwirtschaftliche Maschine nach einem oder mehreren der vorhergehenden Ansprüche,
dadurch gekennzeichnet, daß das Flachteil durch ein Metallblech (86) gebildet ist, das an der Rückseite des Stützbeines (77, 80) angebracht ist.

34. Landwirtschaftliche Maschine nach einem oder mehreren der vorhergehenden Ansprüche,
dadurch gekennzeichnet, daß das Metallblech einen oberen Rand aufweist, der sich mindestens bis zum oberen Ende eines jeweiligen Beinabschnittes (77) erstreckt, sowie eine hintere Kante, die entlang einer senkrecht zu einer lokalen Tangente verlaufenden Linie betrachtet in einem Abstand von mindestens 15 cm von der Hinterseite des Stützbeines (77, 80) angeordnet ist.

35. Landwirtschaftliche Maschine nach einem oder mehreren der vorhergehenden Ansprüche,
dadurch gekennzeichnet, daß das Metallblech (86) zumindest an dem Teil des jeweiligen Stützbeinabschnittes (77) angebracht ist, der in Seitenansicht das Rad (76) nicht überlappt.

36. Landwirtschaftliche Maschine nach einem oder mehreren der vorhergehenden Ansprüche,
dadurch gekennzeichnet, daß das Stützbein (77, 80) des Stützgliedes (75) einen oberen Abschnitt (80) und einen unteren Abschnitt (77) aufweist, der über eine Schwenkachse (78) in einer Buchse (79) schwenkbar ist, die sich quer zur Längsrichtung des oberen Beinabschnittes (80) erstreckt und an diesem befestigt ist, und der in der Buchse u. a. mit Hilfe eines Schnellverriegelungselementes (84) gegen Axialverschiebung festgelegt ist und aufgrund des Vorhandenseins dieses Schnellverriegelungselementes (84) außerdem direkt aus der Buchse (79) entfernt werden kann.

## Revendications

1. Machine agricole ayant un châssis allongé (2) qui comporte une partie de châssis central (10) et, sur ses deux côtés, des parties de châssis latéral (13, 14) qui sont pivotantes autour d'arbres de pivotement (12) positionnés transversalement par rapport à la direction longitudinale et sont reliées mutuellement par un vérin d'ajustement hydraulique (16) qui, par l'intermédiaire de chacune de ses extrémités, via un élément intermédiaire respectif (20, 21) et un arbre de pivotement respectif (22), est relié aux parties de châssis respectives (13, 14), caractérisée en ce que chaque élément intermédiaire (20, 21) est constitué d'un élément basculant (20, 21) qui est pivotant au niveau de deux points écartés, ladite interconnexion du vérin d'ajustement hydraulique (16) avec lesdits éléments intermédiaires (20, 21) étant flottante, alors que les points de liaison du vérin d'ajustement (16) avec les éléments intermédiaires (20, 21) sont agencés, dans l'état de la machine pliée vers l'extérieur, à des niveaux de hauteur différents par rapport à la ligne imaginaire passant par les arbres de pivotement (12) du châssis (10), l'agencement étant tel que lors d'un actionnement du vérin d'ajustement (16), une première partie de châssis latéral (13, 14) est toujours mise à pivoter avant l'autre vers une position dirigée vers le haut.

2. Machine agricole selon la revendication 1, caractérisée en ce que la machine est une faneuse et comporte des organes de travail pour faner et/ou ratisser une récolte, alors qu'une partie de châssis latéral (13, 14) comporte au moins deux organes de travail (4).

3. Machine agricole selon la revendication 1 ou 2, caractérisée en ce que l'élément intermédiaire (20, 21) a une première extrémité reliée dans la zone de l'arbre de pivotement (12) du châssis (2) à la partie de châssis latéral relative (13), en pouvant pivoter autour d'un arbre (22).

4. Machine agricole selon l'une quelconque des revendications précédentes, caractérisée en ce que l'élément intermédiaire (20, 21) comporte un troisième point de pivotement ayant un arbre de pivotement (25), auquel un autre élément de liaison (23) relié de manière pivotante à la partie de châssis latéral la plus à l'extérieur (14) est relié de manière pivotante.

5. Machine agricole selon l'une quelconque des revendications précédentes, caractérisée en ce que la partie de châssis la plus à l'extérieur (14) comporte un étrier (18) qui a un trou oblong, dans lequel l'autre élément de liaison (23) est incorporé de manière pivotante via un arbre de pivotement (24).

6. Machine agricole selon l'une quelconque des revendications précédentes, caractérisée en ce que l'étrier (18) s'étend au-delà de l'arbre de pivotement (15) situé entre la partie de châssis latéral la plus à l'extérieur concernée et la plus à l'intérieur concernée (13 et 14, respectivement), et dont une extrémité inclinée constitue une butée pour la position de transport de la machine, la construction étant telle qu'un mouvement de pivotement supplémentaire des parties de châssis latéral (13, 14) est empêché.

7. Machine agricole selon l'une quelconque des revendications précédentes, caractérisée en ce que le vérin d'ajustement (16), l'élément intermédiaire (20, 21) et la tige de liaison supplémentaire (23) sont agencés à l'extérieur du châssis (2) et s'étendent de manière prédominante dans la direction longitudinale du châssis (2).

8. Machine agricole selon l'une quelconque des revendications précédentes, caractérisée en ce que la machine comporte un élément intermédiaire (21), alors que l'écartement entre l'arbre de pivotement (22) positionné dans sa liaison avec la partie de châssis latéral (13, 14) et l'arbre de pivotement (26, 27) positionné dans le point de liaison de celui-ci avec le vérin d'ajustement (16) dépasse l'écartement existant entre lesdits arbres de pivotement de l'élément intermédiaire situé de l'autre côté (20).

9. Machine agricole selon l'une quelconque des revendications précédentes, caractérisée en ce que, dans l'état de la machine (1) pliée vers l'extérieur, la ligne imaginaire passant par les arbres (22, 26, 27) qui forment la liaison d'un élément intermédiaire (20, 21) avec le châssis (2) et avec le vérin d'ajustement (16), respectivement, forme un angle d'approximativement 45° avec le châssis (2).

10. Machine agricole selon l'une quelconque des revendications précédentes, caractérisée en ce que, dans la position de transport de la machine (1), la ligne imaginaire passant par les arbres (22, 26, 27) qui forment la liaison entre un élément intermédiaire (20, 21) et le châssis et le vérin d'ajustement (16), respectivement, fait un angle d'approximativement 30° avec une ligne horizontale.

11. Machine agricole selon l'une quelconque des revendications précédentes, caractérisée en ce qu'un élément intermédiaire (21) a une forme telle que, dans l'état plié vers l'extérieur, l'arbre de pivotement (27) situé au point de liaison entre le vérin d'ajustement (16) et l'élément intermédiaire (21) ayant la distance la plus grande entre ledit arbre de pivotement (27) et l'arbre de pivotement (22) de la liaison avec la partie de châssis latéral (13, 14), dans l'état de la machine pliée vers l'extérieur, est positionné approximativement à la même hauteur ou au moins à un niveau plus élevé par rapport au châssis (2) que l'arbre de liaison (25) de la liaison avec la tige de liaison supplémentaire (23).

12. Machine agricole selon l'une quelconque des revendications précédentes, caractérisée en ce qu'un élément intermédiaire (21) a une forme telle que, dans l'état plié vers l'extérieur, l'arbre de pivotement (27) situé au point de liaison entre le vérin d'ajustement (16) et l'élément intermédiaire (21) ayant la plus petite distance entre ledit arbre de pivotement (27) et l'arbre de pivotement (22) de la liaison avec la partie de châssis latéral (13, 14) est positionné, dans l'état de la machine pliée vers l'extérieur, approximativement à la même hauteur ou au moins à un niveau inférieur par rapport au châssis (2) que celui de l'arbre de liaison (25) de la liaison avec la tige de liaison complémentaire (23).

13. Machine agricole selon l'une quelconque des revendications précédentes, caractérisée en ce que la machine comporte des crochets de verrouillage (33) qui, dans le but de verrouiller la machine dans la position de transport, peuvent s'accrocher autour d'un cliquet (35) disposé sur la partie de châssis latéral la plus à l'intérieur (13).

14. Machine agricole selon l'une quelconque des revendications précédentes, caractérisée en ce que les crochets de verrouillage (33) sont reliés de manière pivotante à une poutre porteuse (31), s'étendant de manière prédominante horizontalement, d'un chevalet (3) agencé sur la partie de châssis central (10).

15. Machine agricole selon l'une quelconque des revendications précédentes, caractérisée en ce que la machine peut atteindre une position de transport, dans laquelle les parties de châssis latéral les plus à l'intérieur (13) peuvent être verrouillées dans une position de manière prédominante verticale et les parties de châssis latéral les plus à l'extérieur (14) forment un angle d'approximativement 135° avec la partie de châssis latéral la plus à l'intérieur concernée (13).

16. Machine agricole selon l'une quelconque des revendications précédentes, caractérisée en ce que la machine comporte des moyens (36, 62, 51), à l'aide desquels, pour obtenir l'état de la machine pliée vers l'extérieur, une première partie de châssis latéral (13, 14) est toujours ajustée à partir de la position de transport vers un état entièrement plié vers l'extérieur avant la partie de châssis latéral située de l'autre côté.

17. Machine agricole selon l'une quelconque des revendications précédentes, caractérisée en ce que la partie de châssis (13, 14) qui via l'élément intermédiaire (20) ayant la distance la plus courte entre les arbres de pivotement (22, 26, 27) qui relient cet élément intermédiaire (20) à la partie de châssis latéral concernée (13, 14) et au vérin d'ajustement (16), respectivement, est toujours ajustée en premier vers l'état de la machine pliée vers l'extérieur.

18. Machine agricole selon l'une quelconque des revendications précédentes, caractérisée en ce que les moyens sont constitués par un élément de poussée (36) qui est relié à la partie de châssis central (10) et est actif par rapport à une seule partie de châssis latéral de la machine.

19. Machine agricole selon l'une quelconque des revendications précédentes, caractérisée en ce qu'une partie de châssis latéral (13) comporte la zone constituée d'un cliquet (34) prévu pour verrouiller la machine, un élément de butée (62) qui, dans la position de transport de la machine, limite la déformation du crochet de verrouillage concerné (33).

20. Machine agricole selon l'une quelconque des revendications précédentes, caractérisée en ce que les crochets de verrouillage (33) peuvent être actionnés à partir du siège de conducteur par l'intermédiaire d'un câble de commande (34, 46, 61) qui passe le long de la partie de châssis central (10).

21. Machine agricole selon l'une quelconque des revendications précédentes, caractérisée en ce que le câble de commande (61) est ramifié dans la direction allant vers les crochets de verrouillage (33) en deux parties de longueurs inégales, alors que la partie de câble ramifiée (58) qui s'étend vers le crochet de verrouillage est dans la zone de l'élément de butée (62), est tellement plus courte que la partie de câble (59) aboutissant au crochet de verrouillage (33) situé de l'autre côté que l'actionnement du câble (61) jusqu'à la mise en butée d'un crochet de verrouillage (33) contre la butée (62) n'amène pas le déverrouillage du crochet de verrouillage opposé (33).

22. Machine agricole selon l'une quelconque des revendications précédentes, caractérisée en ce que la machine comporte un vérin d'ajustement (16), dont le piston (50) comporte un élément limiteur de pression (57).

23. Machine agricole selon l'une quelconque des revendications précédentes, caractérisée en ce que le limiteur de pression (57) est agencé de telle sorte qu'il n'est actif que par rapport à la pression existant dans la chambre de vérin (51) n'ayant pas la tige de piston (49).

24. Machine agricole selon l'une quelconque des revendications précédentes, caractérisée en ce que la pression requise pour déplacer la tige de piston vers l'extérieur du vérin (16) est limitée par le limiteur de pression (57) à un maximum d'approximativement 1/3 de la pression requise pour rétracter le vérin d'ajustement (16), et plus particulièrement est limitée à un maximum d'approximativement 50 bars.

25. Machine agricole selon l'une quelconque des revendications précédentes, caractérisée en ce que la machine comporte des organes de travail (4) pour faner une récolte située sur le sol et est munie à au moins une extrémité d'un élément formant écran (68), à l'aide duquel le fanage latéral d'une récolte est limité.

26. Machine agricole selon l'une quelconque des revendications précédentes, caractérisée en ce que, dans la position de fonctionnement, l'écran (68) s'étend dans le quart le plus à l'arrière et le plus à l'extérieur de l'élément actif concerné, de manière prédominante le long de sa ligne périphérique, et de manière prédominante dans la direction verticale.

27. Machine agricole selon l'une quelconque des revendications précédentes, caractérisée en ce que l'écran (68) s'étend vers le côté arrière de l'organe de travail concerné (4) jusqu'au-delà de la ligne centrale imaginaire qui s'étend dans la direction de déplacement actif en direction du point médian de la machine.

28. Machine agricole selon l'une quelconque des revendications précédentes, caractérisée en ce que l'élément formant écran (68) est constitué de dents (73) s'étendant principalement verticalement, constituées de matériau élastique, tel qu'un acier pour ressort ou une matière de résine synthétique.

29. Machine agricole selon l'une quelconque des revendications précédentes, caractérisée en ce que les dents (73) de l'élément formant écran (68) atteignent le sol pendant un fonctionnement, de sorte que les dents (73) réalisent une fonction de ratissage.

30. Machine agricole selon l'une quelconque des revendications précédentes, caractérisée en ce que l'élément formant écran (68) est agencé de telle sorte qu'il est pivotant et peut être verrouillé autour d'un arbre de pivotement (66) vers au moins une position active et une position de transport et dans celles-ci.

31. Machine agricole selon l'une quelconque des revendications précédentes, caractérisée en ce que la machine comporte un élément de support comportant une roue (76) et une jambe de support (77, 80), sur laquelle un matériau formant plaque (86) est fixé pour augmenter sa surface superficielle.

32. Machine agricole selon l'une quelconque des revendications précédentes, caractérisée en ce que le matériau formant plaque (86) est fixé dans la direction du déplacement actif (A).

33. Machine agricole selon l'une quelconque des revendications précédentes, caractérisée en ce que le matériau formant plaque est constitué d'un tronçon de plaque métallique (86), qui est fixé sur le bord de fuite de la jambe de support (77, 80).

34. Machine agricole selon l'une quelconque des revendications précédentes, caractérisée en ce que le tronçon de plaque métallique a un bord supérieur qui s'étend au moins jusqu'à l'extrémité supérieure d'une partie de jambe concernée (77) et une partie de queue qui, prise dans une ligne perpendiculaire à une ligne de contact locale, est positionnée à au moins 15 cm du bord de fuite de la jambe de support (77, 80).

35. Machine agricole selon l'une quelconque des revendications précédentes, caractérisée en ce que le tronçon de plaque métallique (86) est fixé sur au moins la partie de la partie de jambe de support concernée (77) qui, prise en vue latérale, ne recouvre pas la roue (76).

36. Machine agricole selon l'une quelconque des revendications précédentes, caractérisée en ce que la jambe de support (77, 80) de l'élément de support (75) comporte une partie supérieure (80) et une partie inférieure (77) qui, via un arbre de pivotement (78), est pivotante dans une bague (79) s'étendant transversalement à la direction longitudinale de la partie de jambe supérieure (80) et fixée sur celle-ci, et est verrouillée dans celle-ci entre autres à l'aide d'un élément de verrouillage à action rapide (84) à l'encontre d'un déplacement axial et, du fait de la présence de cet élément de verrouillage à action rapide (84), peut de plus être directement enlevée de la bague (79).
